Europäisches Patentamt

European Patent Office

Office européen des brevets

(19)

(11) Numéro de publication: **0 111 204**
**B1**

# FASCICULE DE BREVET EUROPÉEN

(12)

(45) Date de publication du fascicule du brevet:
03.09.86

(21) Numéro de dépôt: 83111663.7

(22) Date de dépôt: 22.11.83

(51) Int. Cl.⁴: **F 16 D 23/14**

(54) **Butée d'embrayage à amortissement de bruit et de vibrations.**

(30) Priorité: 24.11.82 FR 8219713

(43) Date de publication de la demande:
20.06.84 Bulletin 84/25

(45) Mention de la délivrance du brevet:
03.09.86 Bulletin 86/36

(84) Etats contractants désignés:
DE GB IT SE

(56) Documents cité:
FR-A-2 230 235
FR-A-2 246 769
FR-A-2 254 985
FR-A-2 317 550
FR-A-2 384 990
GB-A-2 045 380

(73) Titulaire: SKF COMPAGNIE D'APPLICATIONS
MECANIQUES & CIE faisant commerce sous le
nom de COMPAGNIE DES ACIERS,
OUTILLAGES ET, EQUIPEMENTS INDUSTRIELS
1, avenue Newton, F-92142 Clamart (FR)

(72) Inventeur: Perrichot, Daniel, 7 rue Saint Pol Roux,
F-78280 Guyancourt (FR)
Inventeur: Fillon, Marcel, 35 rue Emile Eudes,
F-94140 Alfortville (FR)

(74) Mandataire: Casalonga, Axel, BUREAU D.A.
CASALONGA OFFICE JOSSE & PETIT
Morassistrasse 8, D-8000 München 5 (DE)

## Description

La présente invention est relative à une butée d'embrayage présentant des moyens susceptibles de filtrer ou d'amortir les bruits et les vibrations intervenant habituellement dans les butées d'embrayage de véhicules automobiles. La butée d'embrayage de l'invention comporte de préférence des moyens permettant d'obtenir un auto-alignement élastique guidé du palier à roulement de la butée d'embrayage qui se déplace à chaque opération de débrayage dans un plan radial. La butée de l'invention peut également être du type à auto-centrage, auquel cas des moyens sont prévus pour que le roulement soit placé en position centrée à la première opération de débrayage et maintenu dans cette position tant qu'un ajustement du centrage n'est pas nécessaire.

Les butées d'embrayage à auto-alignement élastique ou à auto-centrage sont destinées à coopérer avec des embrayages à disques et plus particulièrement des embrayages à diaphragmes. La butée d'embrayage comporte habituellement un palier à roulement par exemple à billes muni de moyens élastiques permettant l'auto-alignement ou l'auto-centrage ainsi qu'une douille de guidage coulissant sur un tube guide. Les moyens élastiques permettent un déplacement radial de la butée et notamment de la bague du palier à roulement qui se trouve en contact avec le diaphragme afin de réaliser l'auto-alignement ou l'auto-centrage par rapport au diaphragme.

Dans des butées d'embrayage de ce type, l'une des deux bagues du palier à roulement transmet les efforts de débrayage en venant en appui directement avec le diaphragme ou en restant continuellement en contact avec celui-ci sous une précharge déterminée tandis que l'autre bague du roulement reçoit la poussée de l'organe de manoeuvre ou fourchette de débrayage dont les deux branches viennent s'appuyer par exemple sur une portion adaptée à cet effet de la douille de guidage, éventuellement par l'intermédiaire d'une plaque d'appui.

La bague du roulement venant ou restant en contact sous précharge avec le diaphragme, par exemple la bague extérieure du roulement, présente généralement une face d'appui torique, la butée n'étant pas exactement centrée sur l'arbre de la boîte de vitesses ni parfaitement alignée par rapport à l'axe de rotation du diaphragme. Par ailleurs, l'axe géométrique du diaphragme de l'embrayage, son axe de rotation et l'axe de l'arbre de la boîte de vitesses ou du tube guide ne coincident pas toujours exactement ce qui rend encore plus nécessaire de prévoir une possibilité de déplacement de la butée lors de l'opération de débrayage.

La FR-A-2 317 550 décrit une butée d'embrayage comportant un manchon élastique muni de nervures radiales qui viennent en contact direct avec le tube guide et qui présentent une structure particulière de façon à assurer à la fois la rigidité et la souplesse nécessaires à un fonctionnement correct et répété de la butée lors du fonctionnement de l'embrayage du véhicule.

Pour éviter tout mouvement de pivotement de la butée lors de l'opération de débrayage, mouvement qui entraînerait une usure prématurée de la surface de contact du diaphragme, on a également déjà prévu dans la FR-A-2.384.990 d'adjoindre à une telle butée d'embrayage des moyens de guidage constitués par une douille de guidage en un matériau rigide en métal ou en matière plastique appropriée qui s'étend au moins partiellement entre la bague intérieure du roulement et le tube guide.

Dans la FR-A-2 452 633 on a décrit une butée d'embrayage à auto-alignement élastique guidé comportant une douille de guidage évitant tout pivotement lors de chaque opération de débrayage et réduisant en outre le frottement sur le tube-guide lors du déplacement axial de la butée.

Dans les butées d'embrayage décrites dans ces documents antérieurs, on constate cependant dans la pratique que les vibrations provenant, soit du moteur du véhicule, soit de la boîte de vitesses, soit encore de ces deux organes mécaniques simultanément, se trouve transmisent par la butée d'embrayage et sa fourchette de commande à l'habitacle du véhicule. Dans le cas de butées d'embrayage ne restant pas en permanence en contact avec le diaphragme de l'embrayage, les vibrations de la boîte de vitesses sont transmises par l'intermédiaire du tube guide à la butée d'embrayage. Dans le cas d'une butée d'embrayage en contact permanent avec le diaphragme, les vibrations provenant du moteur du véhicule sont transmises par l'intermédiaire du diaphragme de l'embrayage et viennent s'ajouter aux vibrations provenant de la boîte de vitesses et transmises par l'intermédiaire du tube guide.

Ces vibrations et les bruits qui en résultent ne sont nullement filtrées par les différents éléments de la butée d'embrayage en contact les uns avec les autres et destinés à assurer l'auto-alignement ou l'auto-centrage de la butée.

Dans la FR-A-2.230.235 se trouve décrit une butée d'embrayage à centrage élastique et à amortissement de bruit dans laquelle un matériau élastique filtrant les vibrations se trouve interposé entre le roulement de la butée d'embrayage et l'organe d'appui de la fourchette de commande ainsi qu'entre le tube guide et la butée d'embrayage. On obtient de ce fait une filtration des vibrations. Toutefois, ce résultat ne peut être obtenu qu'au détriment de la suppression de tout guidage de la butée dans un plan radial.

Or, l'absence de guidage de la butée d'embrayage présente des inconvénients importants dans la pratique. En effet, lorsque les différentes languettes du diaphragme de l'embrayage entrant en contact avec l'une des bagues de la butée n'ont pas toutes exactement la même position, l'entrée en contact de la butée avec le diaphragme de l'embrayage tend à faire pivoter la butée autour d'un axe perpendiculaire à l'axe de déplacement normal de la butée. Lorsqu'une telle butée d'embrayage est actionnée au moyen d'une fourchette de commande montée sur rotule, ce qui est le cas en général, il n'existe alors aucun moyen pour empêcher un mouvement de pivotement de la butée qui entraîne une usure prématurée de la surface de contact du diaphragme.

Par ailleurs, la présence d'un matériau souple et élastique entre le roulement de la butée et la plaque d'appui de la fourchette de commande empêche l'obtention d'une précision convenable pour la course de débrayage telle qu'elle est exigée sur un véhicule à l'heure actuelle. En effet, l'écrasement de ce matériau ne peut pas être contrôlé avec suffisamment de précision.

L'invention a donc pour objet de réaliser une butée d'embrayage à auto-alignement ou auto-centrage qui reste convenablement guidée dans un plan radial lors des mouvements d'auto-alignement ou d'auto-centrage et dans laquelle les bruits et vibrations ne puissent pas être transmis à l'organe de manoeuvre ou fourchette de commande.

La butée d'embrayage selon l'invention comporte un palier à roulement muni de bagues intérieure et extérieure et une douille de guidage rigide comportant une collerette radiale. La douille de guidage s'étend entre la bague intérieure du roulement et un tube-guide par rapport auquel elle peut coulisser axialement. Une branche radiale de l'une des bagues du roulement est en contact de frottement avec une face de la collerette radiale afin d'assurer le maintien du parallélisme entre l'axe de la butée et l'axe du tube guide lors des mouvements relatifs d'auto-alignement ou d'auto-centrage de la butée par rapport à la douille de guidage. Des moyens élastiques autorisent un déplacement contrôlé du roulement de la butée par rapport à la douille de guidage en vue de l'auto-alignement ou de l'auto-centrage. De tels moyens peuvent être adaptés pour permettre un auto-alignement de la butée ou un auto-centrage libre ou maintenu. Une plaque d'appui, de dureté appropriée, coopère avec l'autre face de la collerette radiale de la douille de guidage afin de transmettre les efforts de l'organe de manoeuvre à la butée d'embrayage. Des moyens élastiques d'écartement sont disposés entre la collerette radiale de la douille de guidage et la plaque d'appui de façon que la plaque d'appui et la collerette radiale n'entrent en contact direct qu'au moment où l'organe de manoeuvre exerce un effort axial sur la plaque d'appui en vue d'une manoeuvre de débrayage.

Grâce à l'existence des moyens élastiques d'écartement disposés comme il vient d'être dit, les vibrations et les bruits provenant du moteur du véhicule et de la boîte de vitesses ne peuvent pas être transmis à l'habitacle du véhicule par l'intermédiaire de l'organe de manoeuvre de la butée d'embrayage puisqu'ils se trouvent filtrés par lesdits moyens élastiques.

La collerette radiale de la douille de guidage présente de préférence des protubérances faisant saillie vers la plaque d'appui sans entrer en contact avec celle-ci en l'absence d'effort axial sur la plaque d'appui. Par effort axial il convient d'entendre ici un effort en vue de la commande de débrayage et non pas l'effort axial résultant d'une éventuelle précharge sur la butée restant en contact avec le diaphragme. Les moyens élastiques d'écartement sont disposés aux endroits dénués desdites protubérances. Lors de l'apparition d'un effort axial de commande sur l'organe de manoeuvre de la butée, la plaque d'appui soumise à un effort axial vient en contact avec les protubérances de la collerette radiale de la douille de guidage afin d'assurer la manoeuvre de débrayage.

Dans une variante de l'invention c'est la plaque d'appui qui présente des protubérances faisant saillie en direction de la collerette radiale qui présente cette fois un profil plan. Comme précédemment, ces protubérances n'entrent pas en contact avec la collerette radiale en l'absence d'effort axial sur la plaque d'appui autre que celui résultant d'une précharge éventuelle. Les moyens élastiques d'écartement sont disposés aux endroits dénués de protubérances.

Dans tous les cas les moyens élastiques peuvent être avantageusement constitués par plusieurs éléments déformables en matière élastique par exemple en caoutchouc. Ces éléments élastiques peuvent être fixés sur la collerette radiale de la douille de guidage ou sur la plaque d'appui. La fixation de ces éléments en matière élastique peut être faite par tout moyen, en particulier par collage, surmoulage ou encliquetage.

Les moyens élastiques peuvent également être constitués par une couche de matière élastique déformable, par exemple en caoutchouc, fixée par collage ou surmoulage sur la plaque d'appui ou sur la collerette radiale, ladite couche étant interrompue dans les zones des protubérances de ladite plaque d'appui ou de la collerette radiale. Comme précédemment, lors de l'utilisation de plusieurs éléments déformables en matière élastique, l'épaisseur de la couche déformable est choisie de façon qu'en l'absence d'effort axial en vue d'une commande de débrayage sur la plaque d'appui, (abstraction faite d'une éventuelle précharge) cette dernière n'entre pas en contact direct avec la collerette radiale de la douille de guidage tandis que lors de l'apparition d'un tel effort axial en vue d'une manoeuvre de débrayage, un contact s'établisse entre ces deux pièces de façon à permettre une manoeuvre précise.

Le choix de l'épaisseur convenable des moyens élastiques d'écartement ainsi que le choix de leur déformabilité seront aisément effectués par l'homme de l'art de façon à maintenir un écartement entre la plaque d'appui et la douille de guidage en l'absence d'effort de manoeuvre assurant ainsi la suppression de la transmission des bruits et vibrations et l'établissement d'un contact direct entre la plaque d'appui et la collerette radiale de la douille de guidage lorsqu'un effort axial est exercé sur la plaque d'appui en vue d'une manoeuvre de débrayage.

L'invention sera mieux comprise à l'étude de deux nodes de réalisation décrits à titre d'exemples nullement limitatifs et illustrés par les dessins annexé, sur lesquels:

la fig. 1 est une vue en coupe schématique en élévation d'un premier mode de réalisation de l'invention;

la fig. 2 est une vue extérieure de côté de la fig. 1;

la fig. 3 est une section partielle selon III-III de la fig. 1 montrant les moyens élastiques d'écartement en l'absence d'effort axial en vue d'une manoeuvre de débrayage;

la fig. 4 est une section analogue à celle de la fig. 3 montrant l'écrasement des moyens élastiques d'écartement lors d'un effort axial en vue d'une manoeuvre de débrayage;

la fig. 5 est une vue schématique en coupe en élévation d'un autre mode de réalisation de l'invention; et

la fig. 6 est une section partielle selon VI-VI de la fig. 5 montrant les moyens élastiques d'écartement en l'absence d'effort axial de commande de débrayage.

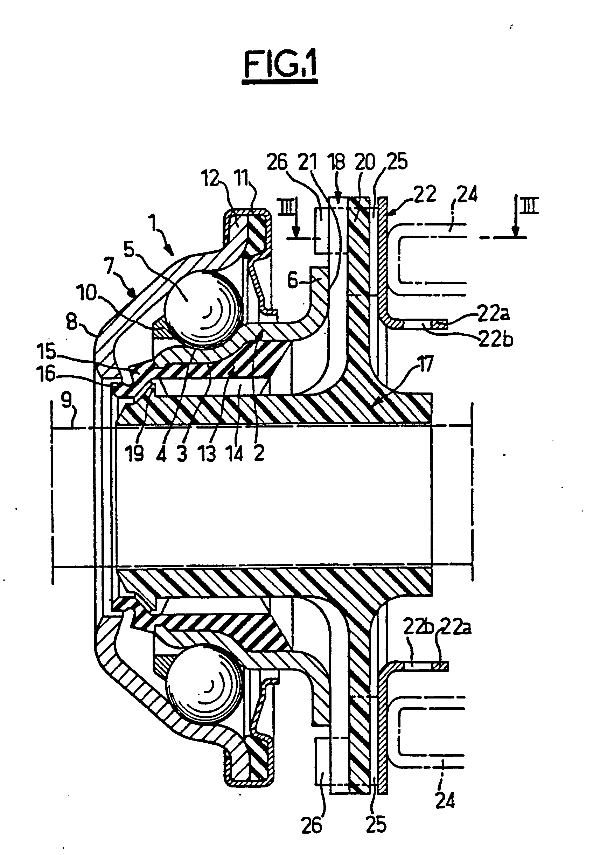

Telle qu'elle est représentée sur les fig. 1 à 4 la butée d'embrayage conforme à l'invention comporte un palier à roulement référencé 1 dans son ensemble muni d'une bague intérieure de roulement 2 à paroi mince réalisée par emboutissage d'une tôle ou d'un tube présentant une partie tubulaire 3 et un chemin de roulement torique 4 pour une rangée de billes 5. La partie tubulaire 3 se prolonge extérieurement par une branche radiale 6 en forme de collerette. Le roulement à billes 1 se complète par une bague extérieure 7 également à paroi mince réalisée par emboutissage d'une tôle ou d'un tube. La bague extérieure 7 comporte une portion torique 8 qui peut venir en contact ou être maintenue en contact avec la surface d'un diaphragme non représenté sur la figure lors d'un déplacement longitudinal de l'ensemble de la butée par rapport au tube guide 9 représenté en trait mixte sur la fig. 1 et à l'intérieur duquel tourne l'arbre de la boîte de vitesses non représenté. Les billes 5 sont maintenues par une cage 10, le roulement 1 étant protégé par un flasque 11 fixé sur une extension radiale 12 dirigée vers l'extérieur de la bague externe 7.

Un manchon en matière élastique 13 par exemple en élastomère ou en caoutchouc naturel, est disposé à l'intérieur de la partie tubulaire 3 de la bague intérieure 2. Le manchon élastique 13 comprend une pluralité de nervures 14 parallèles à l'axe de la butée dirigées vers l'intérieur. Les nervures 14 sont légèrement inclinées par rapport à la direction radiale et présentent de préférence un profil allant en s'amincissant depuis le manchon 13 vers leur bord libre. Le manchon 13 peut être fixé par collage, surmoulage ou encliquetage à l'intérieur de la bague 2. Une prolongation axiale 15 du manchon 13 s'étend en direction de la portion torique 8 de la bague externe 7 et présente une lèvre annulaire 16 qui protège le roulement 1 en réduisant les possibilités d'entrée de matières étrangères dans la zone des billes 5.

Le bord libre des nervures 14 entre en contact avec une portion de la surface externe cylindrique d'une douille de guidage rigide 17 réalisée par exemple en matière plastique et dont l'alésage est en contact de glissement avec la surface externe du tube guide 9 assurant le guidage du déplacement longitudinal de la butée lors de chaque opération de débrayage. La douille de guidage 17 comporte une collerette radiale 18. Un rebord 19 permet le maintien du roulement 1 muni du manchon élastique 13 autour de la douille de guidage 17 après encliquetage des nervures 14 par déplacement du roulement 1 muni de son manchon 13 de la gauche vers la droite sur la fig. 1 lors du montage.

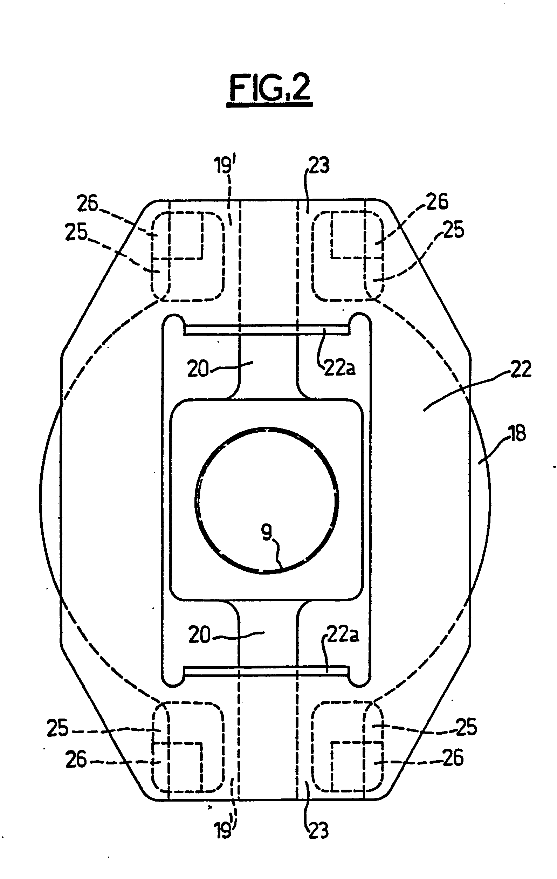

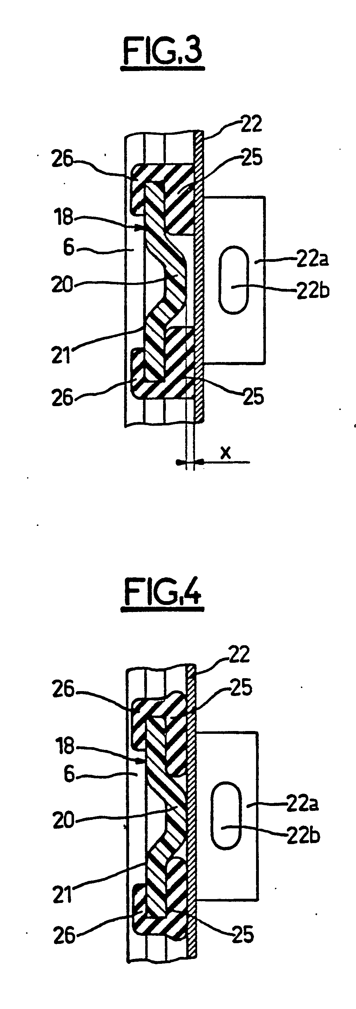

La collerette radiale 18 comporte deux extensions radiales 19' diamètralement opposées visibles sur la fig. 2 et munies chacune d'une nervure 20 dirigée radialement et formant une protubérance en saillie en direction opposée du roulement 1 c'est-à-dire vers la droite sur les fig. 1 et 3.

La branche radiale 6 en forme de collerette annulaire de la bague intérieure 2 se trouve en contact de frottement avec la face 21 de la collerette radiale 18 de la douille de guidage 17. De cette manière, lors d'une opération de débrayage, le roulement à billes 1 peut se déplacer par rapport à la douille de guidage 17 grâce à la déformation des nervures 14 du manchon élastique 13. Ce déplacement se fait strictement dans un plan radial grâce au contact de frottement entre la branche radiale 6 et la face 21 de la collerette 18.

Une plaque d'appui 22 présentant des caractéristiques d'usure appropriées et réalisée de préférence en métal entoure la douille de guidage 17 à l'opposé du roulement 1. La plaque d'appui 22 présente un contour extérieur épousant sensiblement la forme de la collerette radiale 18. En particulier la plaque d'appui 22 comporte également comme on peut le voir sur la fig. 2 deux prolongations radiales 23 qui viennent en face des prolongations radiales 19 de la collerette 18. L'alésage de la plaque d'appui 22 comporte deux branches repliées axialement 22a munies d'un évidement 22b qui peut coopérer avec une branche de retenue de la fourchette de commande ou organe de manoeuvre 24 représenté en trait mixte sur la fig. 1. La fourchette de commande 24 vient en contact avec la plaque d'appui 22 comme on peut le voir sur la fig. 1.

Sur sa face opposée à la fourchette de commande 24, la plaque d'appui 22 est munie de quatre blocs 25 réalisés en matière élastique par exemple en caoutchouc ou en élastomère, surmoulés ou collés et disposés par paire de façon à se trouver de chaque côté d'une nervure 20 de la collerette radiale 18 comme on peut le voir sur les fig. 2 et 3. Les blocs élastiques 25 présentent des doigts d'agrafage 26 qui viennent enserrer le bord périphérique de la collerette radiale 18 permettant ainsi d'immobiliser en rotation la plaque d'appui 22 par rapport à la douille de guidage 17.

Comme on peut le voir sur les fig. 1 et 3 qui représentent la position relative des différents organes lorsque l'embrayage du véhicule est accouplé c'est-à-dire pendant tout le temps où le conducteur du véhicule n'appuie pas sur la pédale d'embrayage, aucun effort axial autre que celui résultant d'une éventuelle précharge n'étant exercé par l'intermédiaire de la fourchette de commande 24, un jeu X subsiste entre la plaque d'appui 22 et les nervures en saillie 20 de la collerette radiale 18. Le jeu X, de quelques dixièmes de millimètre, permet donc d'isoler parfaitement la plaque d'appui 22 des bruits et vibrations transmis à la fois par le roulement 1 dont la bague extérieure est en contact avec le diaphragme de l'embrayage et par la douille de guidage 17 en contact avec le tube guide 9.

Lorsque le conducteur agit sur la commande de débrayage, un effort axial est exercé par l'intermédiaire de la fourchette de commande ou organe de manoeuvre 24 qui vient appuyer sur la plaque 22. Cet effort axial entraîne l'écrasement des quatre blocs élastiques 25 comme illustré sur la fig. 4. La plaque d'appui 22 vient alors en contact direct avec les nervures 20 de la douille de guidage rigide 17. Lors de cette opération de débrayage, la douille de guidage 17 coulisse axialement le long du tube guide 9 et le roulement 1 peut se déplacer radialement grâce à l'existence des nervures 14 du manchon élastique 13 afin d'aligner l'axe de rotation de la butée avec l'axe de l'embrayage.

Il y a lieu de noter que cette action est de courte durée puisqu'elle n'intervient qu'au moment de la mise en prise de la boîte de vitesses ou du changement de vitesses. La plus grande partie du temps de fonctionnement correspond au contraire à la position illustrée sur les fig. 1 et 3 dans laquelle les bruits et vibrations sont filtrés comme il a été dit précédemment.

On notera que les moyens élastiques d'écartement illustrés ici sous la forme de deux paires de blocs élastiques localisés pourraient également être réalisés sous la forme d'une couche recouvrant la majeure partie de la face de la plaque d'appui dirigée vers le roulement 1 et munie simplement d'évidements au droit des nervures 20.

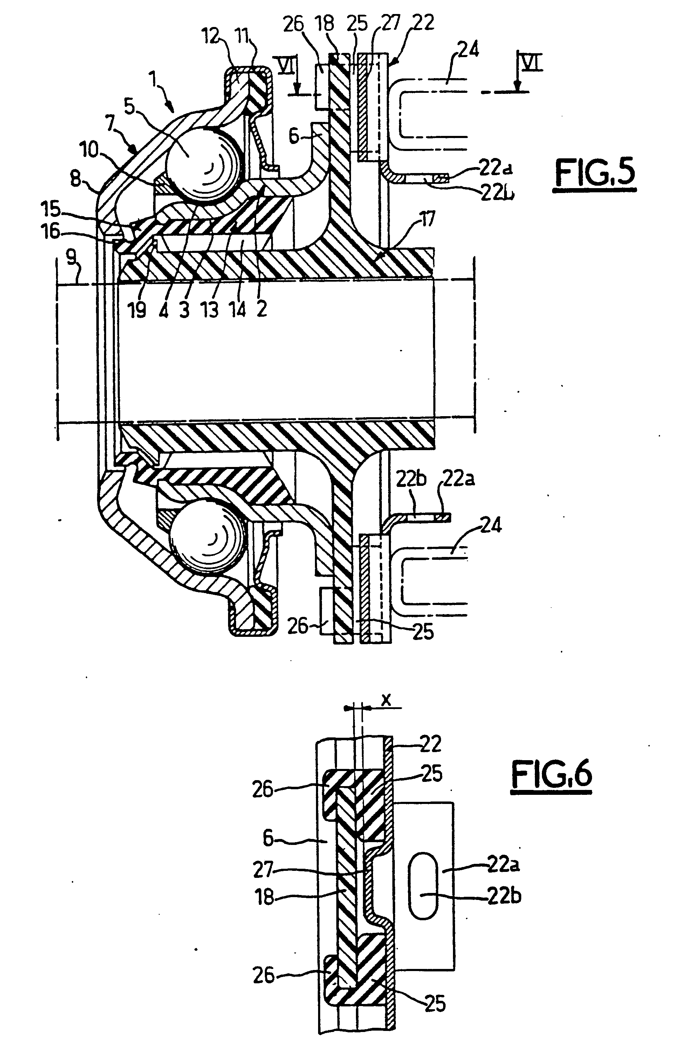

Le mode de réalisation illustré sur les fig. 5 et 6 sur lesquelles les pièces identiques portent les mêmes références, se différencie uniquement du mode de réalisation précédent par le fait que c'est cette fois la plaque d'appui 22 qui comporte des nervures en saillie 27 sensiblement analogues aux saillies 20 du mode de réalisation précédent. La collerette radiale 18 est cette fois de forme plane. Comme dans le mode de réalisation précédent, un jeu X subsiste entre les nervures 27 et la collerette 18 en l'absence d'effort axial sur la plaque d'appui 22 grâce à l'existence des blocs élastiques 25 qui empêchent la transmission des vibrations et des bruits.

Bien que la présente invention ait été décrite à partir de modes de réalisation illustrés sur les figures, on comprendra que l'invention puisse s'appliquer à d'autres types de butées d'embrayage dans la mesure où elles comportent une douille de guidage rigide et une plaque d'appui par l'intermédiaire de laquelle s'exerce l'effort axial de débrayage, telles que les butées à auto-centrage libre ou maintenu. Dans ce cas, la butée d'embrayage ne comporte pas le manchon élastique 13 et des moyens élastiques sont prévus réalisant un serrage axial entre l'une des bagues du roulement et la douille rigide de façon à créer des forces de frottement capables de maintenir en position le roulement après centrage. De plus, la bague venant en contact avec le diaphragme peut être la bague extérieure comme représenté dans l'exemple illustré ou la bague intérieure du roulement. Dans ce dernier cas, la branche radiale 6 fait partie de la bague extérieure du roulement.

## Revendications

1. Butée d'embrayage comportant: un palier à roulement (1) muni de bagues intérieure (2) et extérieure (7); une douille de guidage rigide (17) comportant une collerette radiale (18) et s'étendant entre la bague intérieure du roulement et un tube guide (9) par rapport auquel elle peut coulisser axialement, une branche radiale (6) de l'une des bagues du roulement étant en contact de frottement avec une première face (21) de ladite collerette radiale (18) afin d'assurer le maintien du parallélisme entre l'axe de la butée et l'axe du tube guide; des moyens élastiques (13, 14) autorisant un déplacement contrôlé du roulement (1) par rapport à la douille de guidage (17); et une plaque d'appui (22) coopérant avec une deuxième face de ladite collerette radiale (18) afin de transmettre les efforts de l'organe de manoeuvre (24) de la butée d'embrayage, caractérisée par le fait que des moyens élastiques d'écartement (25) sont disposés entre la deuxième face de la collerette radiale (18) de la douille de guidage (17) et la plaque d'appui (22) de façon que la plaque d'appui (22) et la collerette radiale (18) n'entrent en contact direct qu'au moment où l'organe de manoeuvre (24) exerce un effort axial sur la plaque d'appui (22) en vue d'une manoeuvre de débrayage.

2. Butée d'embrayage selon la revendication 1, caractérisée par le fait que la collerette radiale (18) de la douille de guidage présente des protubérances (20) faisant saillie vers la plaque d'appui (22) sans entrer en contact avec celle-ci en l'absence d'effort axial sur la plaque d'appui

abstraction faite d'une éventuelle précharge, les moyens élastiques d'écartement (25) étant disposés aux endroits dénués desdites protubérances.

3. Butée d'embrayage selon la revendication 1, caractérisée par le fait que la plaque d'appui (22) présente des protubérances (27) faisant saillie vers la collerette radiale (18) de la douille de guidage (17) sans entrer en contact avec celle-ci en l'absence d'effort axial sur la plaque d'appui abstraction faite d'une éventuelle précharge, les moyens élastiques (25) étant disposés aux endroits dénués desdites protubérances.

4. Butée d'embrayage selon l'une quelconque des revendications précédentes, caractérisée par le fait que les moyens élastiques d'écartement sont constitués par plusieurs éléments déformables en matière élastique.

5. Butée d'embrayage selon la revendication 4, caractérisée par le fait que les éléments élastiques sont réalisés sous la forme de deux paires de blocs élastiques déformables fixés sur la plaque d'appui au voisinage des zones de contact de l'organe de manoeuvre, comportant chacun des moyens d'agrafage (26) coopérant avec le bord périphérique de la collerette radiale (18) de la douille de guidage (17) afin d'immobiliser en rotation la plaque d'appui (22) par rapport à la douille de guidage (17).

6. Butée d'embrayage selon les revendications 4 ou 5, caractérisée par le fait que les éléments élastiques sont fixés sur la plaque d'appui par surmoulage, collage ou encliquetage.

7. Butée d'embrayage selon l'une quelconque des revendications 3 à 6, caractérisée par le fait que les éléments élastiques de chaque paire sont placés de part et d'autre d'une nervure (20) de la collerette radiale (18).

8. Butée d'embrayage selon l'une quelconque revendications 3 à 6, caractérisée par le fait que les éléments élastiques de chaque paire sont placés de part et d'autre d'une nervure (27) de la plaque d'appui (22).

9. Butée d'embrayage selon l'une quelconque des revendications 1 à 3, caractérisée par le fait que les moyens élastiques d'écartement sont constitués par une couche de matière élastique déformable fixée sur la plaque d'appui et interrompue dans les zones de protubérances en saillie solidaires de la plaque d'appui ou de la collerette radiale de la douille de guidage.

10. Butée d'embrayage selon l'une quelconque des revendications précédentes, caractérisée par le fait que la branche radiale (6) en contact de frottement avec la collerette radiale (18) de la douille de guidage (17) est solidaire de la bague interne et qu'un manchon élastique d'auto-alignement (13) est monté entre ladite bague interne (2) et la douille de guidage (17) ledit manchon étant múni de nervures axiales (14) en contact avec la surface extérieure de la douille de guidage.

**Patentansprüche**

1. Kupplungsausrücklager, enthaltend: Ein mit Innen(2)- und Außenring (7) ausgerüstetes Wälzlager (1); eine starre Führungsbuchse (17) mit einem Radialkragen (18), die sich zwischen dem inneren Lager-Laufring und einem Führungsrohr (9) erstreckt, im Verhältnis zu dem sie in axialer Richtung gleiten kann, wobei ein Radialbügel (6) von einem der Laufringe in Reibkontakt mit einer ersten Fläche (21) des genannten Radialkragens (18) ist,um die Parallelität zwischen der Achse des Ausrücklagers und der Achse des Führungsrohrs zu wahren elastische Mittel (13, 14), die eine kontrollierte Verschiebung des Wälzlagers (1) gegenüber der Führungsbuchse (17) zulassen; und eine Druckplatte (22), die mit einer zweiten Fläche des genannten Radialkragens (18) zusammenwirkt, um den Druck des Betätigungsorgans (24) des Ausrücklagers zu übertragen, dadurch gekennzeichnet, daß elastische Spreizmittel (25) zwischen der zweiten Fläche des Radialkragens (18) der Führungsbuchse (17) und der Druckplatte (22) angeordnet sind, so daß die Druckplatte (22) und der Radialkragen (18) erst dann in unmittelbar Berührung kommen, wenn das Betätigungsorgan (24) im Hinblick auf das Ausrücken der Kupplung eine axiale Druckkraft auf die Druckplatte (22) ausübt.

2. Kupplungsausrücklager gemäß Anspruch 1, dadurch gekennzeichnet, daß der Radialkragen (18) der Führungsbuchse mit Vorsprüngen (20) versehen ist, die gegen die Druckplatte (22) vorstehen, ohne diese bei Fehlen der axialen Druckkraft abgesehen von einer etwaigen Vorlast zu berühren, wobei die elastischen Spreizmittel (25) an den Stellen ohne die genannten Vorsprünge angeordnet sind.

3. Kupplungsausrücklager gemäß Anspruch 1, dadurch gekennzeichnet, daß die Druckplatte (22) Vorsprünge (27) aufweist, die gegenüber dem Radialkragen (18) der Führungsbuchse (17) vorspringen ohne diesen bei Fehlen der axialen Druckkraft abgesehen von einer etwaige Vorlast, auf die Druckplatte zu berühren, wobei die elastischen Mittel (25) an den Stellen ohne die genannten Vorsprünge angeordnet sind.

4. Kupplungsausrücklager gemäß einem beliebigen der vorstehenden Ansprüche, dadurch gekennzeichnet, daß die elastischen Spreizmittel aus mehreren Elementen aus elastischem Werkstoff bestehen.

5. Kupplungsausrücklager gemäß Anspruch 4, dadurch gekennzeichnet, daß die elastischen Mittel in der Form von zwei Paaren elastisch Verformbarer Blöcke ausgeführt sind, die auf der Druckplatte in der Nähe der Berührungsstellen mit dem Betätigungsorgan befestigt sind und je weils mit Klammermitteln (26) versehen sind die mit dem Umfangsrúnd des Radialkragens (18) der Führungsbuchse (17) zusammenwirken, um die Druckplatte (22) und die Führungsbuchse (17) drehfest miteinander, zu verriegeln.

6. Kupplungsausrücklager gemäß den Ansprüchen 4 oder 5, dadurch gekennzeichnet, daß die elastischen Elemente auf der Druckplatte durch Ausformen, Aufkleben oder Einklinken befestigt sind.

7. Kupplungsausrücklager gemäß einem beliebigen der Ansprüche 3 bis 6, dadurch gekennzeichnet, daß die elastischen Elemente jedes Paars auf beiden Seiten einer Rippe (20) des Radialkragens (18) angeordnet sind.

8. Kupplungsausrücklager gemäß einem beliebigen der Ansprüche 3 bis 6, dadurch gekennzeichnet, daß die elastischen Elemente jedes Paars auf beiden Seiten einer Rippe (27) der Druckplatte (22) angeordnet sind.

9. Kupplungsausrücklager gemäß einem beliebigen der Ansprüche 1 bis 3, dadurch gekennzeichnet, daß die elastischen Spreizmittel aus einer Schicht eines auf der Druckplatte befestigten elastisch verformbaren Werkstoffs bestehen und in den Bereichen der fest mit der Druckplatte bzw. mit dem Radialkragen der Führungsbuchse verbundenen Vorsprünge unterbrochen sind.

10. Kupplungsausrücklager gemäß einem beliebigen der vorstehenden Ansprüche, dadurch gekennzeichnet, daß der in Reibverbindung mit dem Radialkragen (18) der Führungsbuchse (17) befindliche Radialbügel (6) mit dem Innenlaufring fest verbunden ist und daß eine selbstfluchtende elastische Hülse (13) zwischen dem genannten Innenring (2) und der Führungsbuchse (17) angeordnet ist, wobei die genannte Hülse mit Axialrippen (14) versehen ist, die mit der Außenfläche der Führungsbuchse in Berührung stehen.

## Claims

1. Clutch bearing comprising: a rolling bearing (1) equipped with inner (2) and outer (7) races; a rigid guiding bush (17) comprising a radial skirt (18) and situated between the inner race of the bearing and a guide tube (9) relative to which it can slide axially, a radial portion (6) of one of the bearing races being in frictional contact with a first face (21) of the said radial skirt (18) in order to ensure that the clutch bearing axis and the guide tube axis remain parallel; elastic means (13,14) permitting a controlled travel of the bearing (1) relative to the guiding bush (17); and a support plate (22) cooperating with a second face of the said radial skirt (18) in order to transmit the forces of the member (24) actuating the clutch bearing, characterized in that elastic spacing means (25) are arranged between the second face of the radial skirt (18) of the guiding bush (17) and the support plate (22) so that the support plate (22) and the radial skirt (18) come into direct contact only at the time when the actuating member (24) exerts an axial force on the support plate (22) in order to perform a declutching action.

2. Clutch bearing according to Claim 1, characterized in that the radial skirt (18) of the guiding bush has protrusions (20) projecting towards the support plate (22) without coming into contact with the latter in the absence of an axial force on the support plate, without consideration of an eventual preloading, the elastic spacing means (25) being arranged in places devoid of the said protrusions.

3. Clutch bearing according to Claim 1, characterized in that the support plate (22) has protrusions (27) projecting towards the radial skirt (18) of the guiding bush (17) without coming into contact with the latter in the absence of an axial force on the support plate, without consideration of an eventual preloading, the elastic means (25) being arranged in the places devoid of the said protrusions.

4. Clutch bearing according to any one of the preceding claims, characterized in that the elastic spacing means consist of several deformable members made of elastic material.

5. Clutch bearing according to Claim 4, characterized in that the elastic members are made in the form of two pairs of deformable elastic blocks fastened onto the support plate in the neighbourhood of the areas of contact of the actuating member, each comprising clipping means (26) cooperating with the peripheral edge of the radial skirt (18) of the guiding bush (17), in order to immobilize the support plate (22) in rotation relative to the guiding bush (17).

6. Clutch bearing according to Claims 4 or 5, characterized in that the elastic members are fastened onto the support plate by overmoulding, gluing or snap-fastening.

7. Clutch bearing according to any one of Claims 3 to 6, characterized in that the elastic members of each pair are placed on both sides of a rib (20) of the radial skirt (18).

8. Clutch bearing according to any one of Claims 3 to 6, characterized in that the elastic members of each pair are placed on both sides of a rib (27) of the support plate (22).

9. Clutch bearing according to any one of Claims 1 to 3, characterized in that the elastic spacing means consist of a layer of deformable elastic material fastened onto the support plate and interrupted in the areas of projecting protuberances which form an integral part of the support plate or of the radial skirt of the guiding bush.

10. Clutch bearing according to any one of the preceding claims, characterized in that the radial portion (6) in frictional contact with the radial skirt (18) of the guiding bush (17) is integral with the inner race and that an elastic self-aligning sleeve (13) is fitted between the said inner race (2) and the guiding bush (17), the said sleeve being provided with axial ribs (14) in contact with the outer surface of the guiding bush.

# FIG.1

# FIG.2

# FIG.3

# FIG.4

0 111 204

FIG.5

FIG.6